# EUROPÄISCHE PATENTSCHRIFT

(11) **EP 4 031 374 B1**
(45) Veröffentlichungstag und Bekanntmachung des Hinweises auf die Patenterteilung: **13.09.2023**
(21) Anmeldenummer: 20736258.3
(22) Anmeldetag: 19.06.2020
(51) Int. Cl.: B41C 1/05

(54) **DRUCKFORM UND POLYMERES BESCHICHTUNGSMATERIAL DAFÜR**
PRINTING PLATE AND POLYMERIC COATING MATERIAL FOR SAME
PLAQUE D'IMPRESSION ET SON MATÉRIAU DE REVÊTEMENT POLYMÈRE

(30) Priorität: 16.09.2019 DE 102019124814
(43) Veröffentlichungstag der Anmeldung: 27.07.2022
(73) Patentinhaber: Maschinenfabrik Kaspar Walter GmbH & Co. KG, 82152 Krailling (DE); Leibniz-Institut für Oberflächenmodifizierung e.V., 04318 Leipzig (DE)
(72) Erfinder: HELMSTEDT, Ulrike, 04318 Leipzig (DE); FREYER, Annette, 04318 Leipzig (DE); HERRNBERGER, Helmut, 04318 Leipzig (DE); FECHNER, Oliver, 82152 Krailling (DE); GSCHOSSMANN, Christoph, 82152 Krailling (DE)
(74) Vertreter: Müller Hoffmann & Partner
(86) Internationale Anmeldenummer: PCT/EP2020/067145
(87) Internationale Veröffentlichungsnummer: WO 2021/052641

(56) Entgegenhaltungen:
- EP-A1- 1 642 715
- EP-A1- 1 710 094
- DE-A1- 10 113 927
- DE-A1- 10 115 434

## Beschreibung

Die Erfindung betrifft eine Druckform und ein polymeres Beschichtungsmaterial dafür. Insbesondere betrifft die Erfindung ein polymeres Nanokomposit als Einzelschicht für Druckformen, insbesondere für Tiefdruckformen oder -zylinder, Strukturformen oder -zylinder, Prägeformen oder -zylinder sowie Hochdruckformen oder -zylinder oder Beschichtungswalzen sowie Einfärbewalzen, z.B. für Flexodruck, mit für die Anforderungen eines modernen Drucks ausreichenden tribologischen Eigenschaften.

Der Begriff Druckform soll nachfolgend insbesondere als Oberbegriff für Tiefdruckformen, Hochdruckformen oder Strukturformen zum Prägen, aber auch für Beschichtungswalzen oder Einfärbewalzen verwendet werden. Insbesondere Tiefdruckformen oder Hochdruckformen werden zum Bedrucken verschiedenster Objekte wie zum Beispiel Zeitschriften und Verpackungen genutzt, während Strukturformen zum Einprägen einer reliefartigen Struktur in eine meist weiche Oberfläche dienen.

Im Falle von Tiefdruck haben sich vor allem Tiefdruckzylinder mit einem metallischen Grundkörper, der am Umfang mit einem galvanischen Überzug beschichtet ist, durchgesetzt. Die Bebilderungsschicht wird mit Kupfer ausgeführt, darauf ist als Verschleißschutz eine Hartchromschicht aufgebracht. In die galvanische Kupferoberfläche wird nachfolgend mit Hilfe eines mechanischen Stichels oder eines Lasers eine Gravur eingebracht, die die eigentliche Druckform darstellt. Hierbei hat es sich bewährt, die Gravur in Form von kleinen Vertiefungen, sogenannten Näpfchen, einzubringen, die im späteren Druckprozess die Druckfarbe aufnehmen und auf das zu bedruckende Objekt, zum Beispiel eine Papier- oder Kunststoffbahn, übertragen.

Die galvanische Erzeugung geeigneter Überzüge auf Druckformen, insbesondere Tiefdruck- bzw. Strukturzylindern, ist aufwendig und erfordert einige Herstellungsschritte.

Um aufwendige metallische Galvanisierungen zu vermeiden, wurden bereits Überlegungen angestellt, den metallischen Grundkörper eines Tiefdruckzylinders mit einer durch UV-Licht härtbaren Polymerschicht zu überziehen. Dabei sind UV-härtbare Polymerschichten aufgrund der zur Härtung notwendigen eindringenden UV-Strahlung meist transparent. Verringert man durch Zumischung von Additiven die Transparenz, verringert sich auch die Eindringtiefe bzw. Energiedichte der eindringenden UV-Strahlung. Dadurch besteht die Gefahr, dass bei größeren Schichtdicken bzw. einer geringeren Transparenz die Polymerisation nicht mehr vollständig erfolgt und keine vollständige Durchhärtung der Polymerschicht erreicht werden kann.

Die Strukturierung von transparenten Polymerschichten, insbesondere also das Einbringen einer Oberflächenstruktur, zum Beispiel in Form von Näpfchen oder Strukturen zur Farbaufnahme oder zur Prägung, kann in der Regel nur mit Hilfe von UV-Lasern erreicht werden. UV-Laser sind jedoch teuer in der Anschaffung, langsam im Betrieb und aufwendig im Unterhalt. Aufgrund der Anforderungen im Tiefdruck hinsichtlich einer schnellen Strukturierung der Oberfläche, also einem schnellen Einbringen der Druckform in die Oberfläche, sind UV-Laser nur bedingt geeignet.

Der Einsatz von schnelleren, industriell verfügbaren und kostengünstigen Infrarotlasern (IR-Laser) mit ausreichender Abtragungsqualität ist auf transparenten (Polymer-)Schichten meist nicht möglich, da das Infrarotlicht durch die transparente Schicht nicht absorbiert wird und daher durch die Polymerschicht bis auf den (zum Beispiel metallischen) Grundkörper dringt und erst dort eine Abtragung bewirkt. Eine Abtragung und damit Strukturierung an der Oberfläche der transparenten Polymerschicht zur Erzeugung von Tiefdrucknäpfchen kann dadurch nicht erreicht werden.

Alternativ zu der UV-Aushärtung einer Polymerschicht auf einem Tiefdruckzylinder ist auch ein thermisches Aushärten denkbar, aber aufgrund der langen Temperierungszeiten nicht zielführend. Dabei ist zu beachten, dass Tiefdruckzylinder in der Regel aus massiven Stahl- oder Aluminiumkörpern hergestellt sind und meist als dickwandige Rohre mit oder ohne angeschweißte Achsen ausgestaltet werden. Das Aufheizen derart massiger Körper erfordert entsprechende Zeiten.

Die im Tiefdruck üblichen Näpfchen weisen zum Beispiel eine Tiefe von maximal 40 µm auf. Somit wird unter Berücksichtigung von Rundlauffehlern der Zylinder, Zugaben bei der Bearbeitung und Vermeidung von Streulicht eine Mindestschichtstärke einer Polymerschicht von 100 *µ*m angestrebt. Geht man von der heutigen Praxis der Abstufung innerhalb eines Zylindersatzes aus, wird sogar eine maximale Schichtstärke von 250 bis 300 *µ*m erreicht werden müssen. Unter einer Abstufung versteht man eine Durchmesserabstufung innerhalb eines Zylindersatzes für eine Druckmaschine mit z.B. 6 Zylindern, wobei der Durchmesserunterschied vom ersten Druckzylinder zum darauffolgend druckenden Zylinder üblicherweise 0,02mm beträgt. Dies soll bei ungeregelten Druckmaschinen die Längung bzw. Schrumpfung der bedruckten Bahn ausgleichen, um die Druckbilder passergenau auf das Substrat zu drucken.

Somit besteht das Problem, dass es zwar UV-härtbare Polymerschichten gibt, die allerdings transparent sind und somit nur mit einem UV-Laser in ausreichender Qualität bebildert werden können. Polymerschichten, die durch schnellere Infrarotlaser strukturiert werden können, sind hingegen aufgrund der nicht ausreichenden Transparenz nicht mehr UV-härtbar (jedenfalls nicht über die gesamte Schichtdicke) und erfordern daher eine thermische Härtung, die ihrerseits sehr zeit- und energieaufwendig ist.

Aus der DE 101 15 434 A1 ist ein Rasterwalzen-Füllmaterial für tiefenvariable Laserablation bekannt. Mit dem Füllmaterial werden Näpfchenstrukturen von Rasterwalzen befüllt. Nach dem Aushärten des Füllmaterials in den jeweils befüllten Näpfchen kann das Füllmaterial in einzelnen Näpfchen mittels IR-Laserablation entfernt werden, um die Druckform zu bebildern.

In der DE 101 13 927 A1 wird ein Verfahren zur Herstellung von Reliefdruckplatten durch Lasergravur beschrieben, bei dem eine vernetzbare Reliefschicht auf einen dimensionsstabilen Träger aufgebracht wird.

Die EP 1 710 094 A1 offenbart ebenfalls ein Verfahren zum Herstellen eines Laser-gravierbaren Drucksubstrats.

Ein anderes Verfahren wird in EP 1 642 715 A1 beschrieben.

Der Erfindung liegt die Aufgabe zugrunde, eine einfache Polymer-Beschichtung von Druckformen zu ermöglichen, die eine zuverlässige Herstellung der Schicht und eine schnelle Erzeugung der Oberflächenstruktur (Tiefdruck/Hochdruck oder Prägeform) in Verbindung mit ausreichenden Standzeiten und einer hohen Druck- oder Prägequalität ermöglicht.

Die Aufgabe wird erfindungsgemäß gelöst durch eine Druckform mit einer Polymerbeschichtung sowie durch ein entsprechendes Beschichtungsmaterial zum Beschichten einer metallischen oder nichtmetallischen Druckform wie z.B. eines metallischen oder nichtmetallischen Zylinders.

Insbesondere wird ein Beschichtungsmaterial zum Beschichten einer Druckform bereitgestellt, aufweisend
- ein flüssiges Ausgangsmaterial, das durch UV-Licht polymerisierbar ist, um eine Polymermatrix zu bilden; und
- einen Füllstoff, der eine sub-mikroskalige Größe aufweist;
- wobei das Beschichtungsmaterial zusätzlich zu dem sub-mikroskaligen Füllstoff einen weiteren Füllstoff enthält;
   wobei
- der sub-mikroskalige Füllstoff in Partikelform vorliegt und dessen Größe in einem Bereich zwischen 100 nm und 999 nm liegt;
- der weitere Füllstoff ein nanoskaliger Füllstoff ist, derart, dass der weitere Füllstoff Füllstoffpartikel mit einer nanoskaligen Größe in einem Bereich zwischen 1 nm und 99 nm aufweist,
- der sub-mikroskalige Füllstoff aus wenigstens einem Metalloxid und/oder einem Halbmetalloxid besteht, ausgewählt aus metalloxidbeschichtetem Glimmer, TiO₂ oder (Sn, Sb)O₂;
- es sich bei dem nanoskaligen Füllstoff um Metall- und/oder Halbmetalloxide handelt, ausgewählt aus Al₂O₃, SiO₂, TiO₂, ZrO₂ oder metallorganischen Partikeln; wobei
- der sub-mikroskalige Füllstoff kovalent in eine Polymermatrix des Ausgangsmaterials einbindbar ist;
- der nanoskalige Füllstoff zur Erhöhung der Verschleißfestigkeit enthalten ist, der kovalent in die Polymermatrix des Ausgangsmaterials einbindbar ist; und
- durch den sub-mikroskaligen Füllstoff in dem Ausgangsmaterial eine Absorption von IR-Strahlung bewirkbar ist, die höher ist als eine Absorption ohne Füllstoff.

Weiterhin wird eine Druckform, mit
- einem Grundkörper bereitgestellt; wobei
- auf einer Fläche des Grundkörpers wenigstens teilweise eine eine Polymermatrix aufweisende Polymerschicht aufgebracht ist, deren Polymerisation durch UV-Licht induziert ist;
- die Polymerschicht einen sub-mikroskaligen Füllstoff aufweist;
- die Polymerschicht zusätzlich zu dem sub-mikroskaligen Füllstoff einen weiteren Füllstoff aufweist;
   wobei
- der sub-mikroskalige Füllstoff in Partikelform vorliegt und die Größe in einem Bereich zwischen 100 nm und 999 nm liegt;
- der weitere Füllstoff ein nanoskaliger Füllstoff ist, der Füllstoffpartikel mit einer nanoskaligen Größe in einem Bereich zwischen 1 nm und 99 nm aufweist;
- der sub-mikroskalige Füllstoff aus wenigstens einem Metalloxid und/oder einem Halbmetalloxid besteht, ausgewählt aus metalloxidbeschichtetem Glimmer, TiO₂ oder (Sn, Sb)O₂;
- es sich bei dem nanoskaligen Füllstoff um Metall- und/oder Halbmetalloxide handelt, ausgewählt aus Al₂O₃, SiO₂, TiO₂, ZrO₂ oder metallorganischen Partikeln, wobei
- der sub-mikroskalige Füllstoff kovalent in die Polymermatrix der Polymerschicht eingebunden ist;
- der nanoskalige Füllstoff zur Erhöhung der Verschleißfestigkeit enthalten ist, der kovalent in die Polymermatrix des Ausgangsmaterials eingebunden ist; und
- durch den sub-mikroskaligen Füllstoff in der Polymerschicht eine höhere Absorption von Infrarotstrahlung bewirkt wird als in der Polymerschicht ohne Füllstoff.

Es wird daher ein Beschichtungsmaterial zum Beschichten einer Druckform beschrieben, mit einem flüssigen Ausgangsmaterial, das durch UV-Licht polymerisierbar ist, um eine Polymermatrix zu bilden, und Füllstoffen, die kovalent in die Polymermatrix des Ausgangsmaterials einbindbar sind, wobei ein Füllstoff eine sub-mikroskalige Größe aufweist, und wobei durch diesen Füllstoff in dem Ausgangsmaterial eine Absorption von Infrarotstrahlung bewirkt wird, die messbar höher ist als eine Absorption ohne Füllstoff.

Das Beschichtungsmaterial betrifft somit das Material, das auf den Zylinder, insbesondere einen Druckzylinder, am Außenumfang aufgebracht werden und dort die gewünschte Polymerschicht bilden soll. Dementsprechend befindet sich das hier angegebene Beschichtungsmaterial noch im flüssigen Ausgangszustand. Erst durch Bestrahlung mit UV-Licht wird die Polymerisation induziert und das Ausgangsmaterial ausgehärtet. Nachfolgend kann mit Hilfe von Infrarotstrahlung, insbesondere durch einen IR-Laser bzw. NIR-Laser (nahes Infrarot) eine Strukturierung und/oder eine Markierung bzw. Kennzeichnung oder auch Codierung der Außenoberfläche der Polymerschicht erfolgen.

Dementsprechend wird das Ausgangsmaterial durch UV-Licht polymerisiert und nachfolgend durch IR-Strahlung strukturiert. Dabei wird die IR-Absorption durch Zugabe des Füllstoffs erhöht, wodurch erst die eigentliche Laserablation (Strukturierung der Oberfläche) möglich wird. Der Füllstoff liegt aufgrund seiner sub-mikroskaligen Größe in Partikel- bzw. Pigmentform vor und erhöht die Absorption der IR-Strahlung.

Als IR-Strahlung hat sich insbesondere NIR-Strahlung mit einer Wellenlänge von 780 bis 3000 nm, insbesondere bis 1064 nm als geeignet erwiesen.

Bei dem Ausgangsmaterial kann es sich zum Beispiel um UV-härtende Präpolymer- bzw. Monomermischungen handeln, basierend auf Acrylaten von radikalisch UV-härtenden Systemen. Die Kompositschicht umfasst dabei mehrere multifunktionelle durch UV-Strahlenhärtung vernetzbare Monomere, Oligomere und/oder Polymere. Zudem kann ein Haftungsvermittler genutzt werden.

Der sub-mikroskalige Füllstoff besteht aus wenigstens einem Metalloxid und/oder einem Halbmetalloxid. Als Metalloxide eignen sich metalloxidbeschichtete Glimmer, Titandioxid, also TiO₂, oder (Sn, Sb)O₂.

Der sub-mikroskalige Füllstoff liegt in Partikelform vor, wobei die Größe in einem Bereich zwischen 100 nm und 999 nm liegt. Diese Teilchengröße ist geeignet, um die IR-Strahlung bzw. NIR-Strahlung zu absorbieren.

Das Beschichtungsmaterial weist zusätzlich zu dem sub-mikroskaligen Füllstoff weitere nanoskalige Füllstoffe auf, bei denen es sich um nanoskalige Metall- und/oder Halbmetalloxide, insbesondere in Pulverform handelt. Dies sind Al₂O₃, SiO₂, TiO₂, ZrO₂ oder metallorganische Partikel. Diese Partikel dienen zur Erhöhung der Verschleißfestigkeit der Schicht.

Der sub-mikroskalige Füllstoff und der nanoskalige Füllstoff können eine Transmission von UV-Strahlung gewährleisten, derart, dass das Ausgangsmaterial vollständig polymerisierbar ist. Die Füllstoffpartikel erlauben somit die Transmission von UV-Strahlung in dem Maße, wie es für die UV-initiierte Polymerisation erforderlich ist. Dadurch kann eine vollständige Durchhärtung bzw. Durchpolymerisation des Ausgangsmaterials erreicht werden, um eine fest haftende Polymerschicht auf dem zu beschichtenden Gegenstand zu erreichen.

Das Beschichtungsmaterial kann insbesondere elektrisch ableitfähig und/oder nicht elektrostatisch aufladbar sein. So hat sich überraschend ergeben, dass sich das Material nicht elektrostatisch auflädt und sogar ableitend ist. Dieser Aspekt ist vorteilhaft, weil bei Druckvorgängen häufig lösungsmittelbasierte Druckfarben verwendet werden, deren Verarbeitung einen bestimmten Explosionsschutz voraussetzt. Daher ist es vorteilhaft, wenn Entlade- oder gar Entzündungsvorgänge vermieden werden können. Zwar ist es grundsätzlich möglich, Polymere durch die Zugabe von Ruß elektrisch leitfähig zu machen. Jedoch würde diese Maßnahme die Durchlässigkeit der UV-Strahlung beeinträchtigen und die Durchhärtung der Polymerschicht gefährden. Durch Zugabe der erfindungsgemäß vorgesehen Füllstoffe erübrigt sich hingegen die Zugabe von Ruß.

Das Beschichtungsmaterial bzw. die aus dem Beschichtungsmaterial durch UV-Bestrahlung herstellbare Polymerschicht kann unter dem Einfluss von hochabrasiven und lösemittelhaltigen Druckfarben oder Beschichtungsmitteln gegenüber der einem Druckprozess innewohnenden mechanischen (Abrieb-)Belastung beständig sein. Mithilfe des Beschichtungsmaterials ist es somit möglich, eine für einen Druckprozess dauerhaft beständige Polymerschicht zu erzeugen, die den tribologischen Anforderungen beim Drucken genügt.

Es wird eine Druckform angegeben, mit einem Grundkörper wobei auf einer Fläche des Grundkörpers wenigstens teilweise eine Polymerschicht aufgebracht ist, deren Polymerisation durch UV-Licht induziert ist, wobei die Polymerschicht einen sub-mikroskaligen und einen nanoskaligen Füllstoff enthält und wobei durch den sub-mikroskaligen Füllstoff in der Polymerschicht eine höhere Absorption von Infrarotstrahlung bewirkt wird als in der Polymerschicht ohne Füllstoff.

Der Begriff einer "Druckform" wird in diesem Zusammenhang als Oberbegriff für eine Vielzahl unterschiedlicher Anwendungen und Ausprägungen verstanden. Insbesondere soll der Begriff "Druckform" für Tiefdruckformen (z.B. Tiefdruckzylinder), Hochdruckformen (z.B. Hochdruckzylinder) oder Strukturformen (z.B. Struktur- oder Prägezylinder) zum Prägen verstanden werden, sowie für Beschichtungswalzen oder Einfärbewalzen, die z.B. im Flexodruck genutzt werden können. Tiefdruckformen oder Hochdruckformen können zum Bedrucken verschiedenster Objekte wie zum Beispiel Zeitschriften und Verpackungen genutzt werden, während Strukturformen zum Einprägen einer reliefartigen Struktur in eine meist weiche Oberfläche dienen. Die Druckform kann zylindrisch oder plan ausgebildet sein.

Der die Druckform wesentlich bestimmende Grundkörper kann dementsprechend zylindrisch oder plan ausgebildet sein. Bei einem zylindrischen Grundkörper kann es sich dementsprechend bei der die Polymerschicht tragenden Fläche um eine Umfangsfläche des Grundkörpers handeln.

Dabei ist der Grundkörper in der Regel aus Metall, wie zum Beispiel Stahl oder Aluminium ausgeführt. Ebenso aber kann der Grundkörper aus Kunststoff, Glasfaserverbund, Kohlefaserverbund oder Elastomer gebildet sein.

Die Druckform bzw. der Druckzylinder ist mit dem oben angegebenen Beschichtungsmaterial beschichtet, das nachfolgend mit UV-Licht bestrahlt wird, um die Polymerisation zu bewirken. Dementsprechend stellt das oben angegebene Beschichtungsmaterial einen Ausgangszustand dar und die Polymerschicht auf der Druckform einen Endzustand. Diese Polymerschicht wird im Rahmen dieser Erfindung auch als Nanokomposit bezeichnet.

Die Polymerschicht kann nach ihrem Auftragen auf den Grundkörper und nach der Polymerisation mechanisch nachbearbeitet werden, zum Beispiel durch Schleifen, Polieren, Drehen, Fräsen oder Drehfräsen. Dadurch kann die Maßhaltigkeit und - z.B. bei einem Druckzylinder - Rundheit mit der außen aufgebrachten Polymerschicht verbessert werden.

Auf der Oberfläche der Polymerschicht kann eine Näpfchen-, Relief- oder Hochdruck-Struktur durch eine NIR-Strahlung (nahes Infrarot) erzeugt werden. Insbesondere können mit Hilfe eines NIR-Lasers Strukturen in Form von Vertiefungen, sogenannten Näpfchen, auf der Oberfläche der Polymerschicht erzeugt werden. In diese Näpfchen wird z.B. nachfolgend beim eigentlichen Tiefdruckprozess Farbe eingebracht, die dann auf das zu bedruckende Substrat übertragen wird.

Die Polymerschicht kann vor einer Bestrahlung mit einer NIR-Strahlung opak sein, wobei in der Polymerschicht durch eine Bestrahlung mit einer NIR-Strahlung ein Farbumschlag bewirkbar ist. Dieser Farbumschlag kann zum Beispiel eine Veränderung von "opak-hell" in "opak-dunkel" bzw. umgekehrt bedeuten. Auch andere Farbumschläge sind möglich.

Dies ist z.B. auch für die oben erwähnte Kennzeichnung (z.B. Markierung oder auch Codierung) hilfreich, weil die dunkle Markierung gut erkannt werden kann. Auch andere Farbumschläge sind je nach verwendeten Materialien möglich.

Der Farbumschlag in der Polymerschicht kann bereits durch eine NIR-Strahlung bewirkt werden, die eine niedrigere Intensität aufweist als die NIR-Strahlung, die zum Erzeugen der Näpfchen-Struktur erforderlich ist. Damit kann mit einer NIR-Strahlung mit niedrigerer Intensität zwar kein mechanischer Abtrag bzw. keine Laserablation bewirkt werden, aber bereits der Farbumschlag. Dieser kann zum Beispiel zum Einbringen eines Kennzeichens oder eines Codes in die Polymerschicht genutzt werden, um auf diese Weise die gesamte Druckform bzw. den gesamten Druckzylinder zu kennzeichnen oder zu codieren.

Die mithilfe der NIR-Strahlung mit niedrigerer Intensität aufgebrachte Markierung oder Codierung kann Daten enthalten, die maschinell lesbar sind. Dies ermöglicht eine automatische Verarbeitung der fertigen Druckform.

Die Polymerschicht weist zusätzlich zu der Dotierung mit dem sub-mikroskaligen Füllstoff eine Dotierung mit einem nanoskaligen Füllstoff auf. Dadurch kann die Abriebfestigkeit der Polymerschicht verbessert werden, so dass längere Stand- bzw. Betriebszeiten des Druckzylinders im Druckbetrieb erreicht werden können.

Der zusätzliche, nanoskalige Füllstoff ist insbesondere zur Verbesserung der Abriebfestigkeit geeignet. Dabei handelt es sich um Metall- und/oder Halbmetalloxide, ausgewählt aus Al₂O₃, SiO₂, TiO₂, ZrO₂, oder metallorganischen Partikeln.

Ein Verfahren zum Herstellen einer Druckform mit dem oben beschriebenen Beschichtungsmaterial weist die Schritte auf
- Aufbringen des Beschichtungsmaterials auf eine Fläche eines Grundkörpers der Druckform;
- Bilden einer Polymerschicht durch Aushärten des Beschichtungsmaterials aufgrund einer durch eine UV-Strahlung bewirkten Polymerisation;
- Bestrahlen der Polymerschicht mit einer NIR-Strahlung, zum Erzeugen einer Oberflächenstruktur in der Polymerschicht.

Vor dem Bestrahlen der Polymerschicht kann als weiterer Verfahrensschritt ein Bearbeiten der Oberfläche der ausgehärteten Polymerschicht durch ein geeignetes Fertigungsverfahren (z.B. Drehen, Schleifen, Fräsen, Drehfräsen) durchgeführt werden, um eine erforderliche Oberflächengüte zu erreichen. Dieser Verfahrensschritt ist optional und kann ggfs. entfallen, wenn die Beschichtungsqualität für den späteren Druckvorgang ausreichend ist.

Nachfolgend werden einige Aspekte der Erfindung und der verschiedenen Ausführungsformen zusammengefasst.

Wie oben bereits erläutert, wird erfindungsgemäß ein sub-mikroskaliger Füllstoff aus Metall- bzw. Halbmetalloxiden einem Polymer zugegeben. Der Füllstoff erhöht die Absorption von NIR-Strahlung zur Lasermikrostrukturierung. Gleichzeitig wird aber die Transmission von UV-Strahlung in dem Maße erlaubt, wie sie für die UV-initiierte Polymerisation benötigt wird.

Durch das eingesetzte NIR-Additiv (dem sub-mikroskaligen Füllstoff) erfolgt bei Eintragung einer bestimmten NIR-Strahlungsdichte ein Farbumschlag. Zudem wird die NIR-Laserbearbeitbarkeit erhöht, da durch das Additiv die NIR-Strahlung besser absorbiert wird.

Die gelaserten, in der Oberfläche durch Abtrag erzeugten Näpfchen zeigen sich durch den Farbumschlag deutlich sichtbar auf der Oberfläche der Polymerschicht.

Zudem kann bei einer geringeren NIR-Laserleistung auch ein Farbumschlag erzielt werden, ohne eine auf der Oberfläche stattfindenden Ablation.

Das Beschichtungsmaterial bzw. die daraus resultierende Polymerschicht ist somit auch für dickere Schichten mit UV-Strahlen härtbar. Gleichzeitig ist die Polymerschicht aufgrund des sub-mikroskaligen Füllstoffs aber derart intransparent, dass eine Bearbeitung durch einen NIR-Laser (zum Beispiel eine gepulste Laserquelle) möglich ist, ohne dass die Strahlung durch das Polymermaterial hindurchgeht. Vielmehr koppelt die NIR-Strahlung an der Oberfläche der Polymerschicht ein und erlaubt eine Ablation. Dabei kann insbesondere mit einem gepulsten NIR-Ultra-Kurz-Puls-Laser (UKP-Laser) gearbeitet werden.

Der Farbumschlag auf dem Tiefdruckzylinder findet auf der bebilderten Oberfläche in Verbindung mit dem erfolgten Materialabtrag statt. Ebenso kann bei geringerer Laserleistung ein Farbumschlag ohne erfolgten Materialabtrag stattfinden. Dadurch kann das gelaserte Schriftbild auf der Oberfläche des Materials deutlich sichtbar gemacht werden, was vorteilhaft für eine Identifikation oder auch für das Einbringen von (Maschinen-)Daten genutzt werden kann. Der zerstörungsfreie Farbumschlag kann zum Beispiel zur Kennzeichnung mit Hilfe eines QR-Codes für ein Druckzylinder-Erkennungssystem oder zum Speichern benötigter Daten wie zum Beispiel der Chargennummer des Polymers (Ausgangsmaterials), Herstellungsdatum, Durchmesser, Rauigkeit, UV-Härteprozess, Auftragsnummer (Servicehaus), Markenkennzeichnung genutzt werden.

Markierungen dieser Art können auch als Nullpunkt für eine registergenaue Einphasung der Tiefdruckzylinder im Druckwerk sowie für eine Weitergabe der Daten mittels Scanner direkt an die Druckmaschine und dadurch Vorrüstung der Maschine oder als bloße Identifizierung des Druckzylinders mit dem Auge genutzt werden. Letzteres war bisher nur mit optischen Hilfsgeräten wie Mikroskopen möglich.

Das Material ist insbesondere auch aufgrund des weiteren, nanoskaligen Füllstoffs für das z.B. im Tiefdruck vorherrschende System mit Rakel, Farbe, Substrat ausreichend verschleißfest. Besonders erwähnenswert ist, dass im Tiefdruck eine sehr homogene, nicht druckende Oberfläche benötigt wird, die gegen Rakel, Substrat und Farbe verschleißfest ist und somit in Kombination ein geeignetes tribologisches System darstellt.

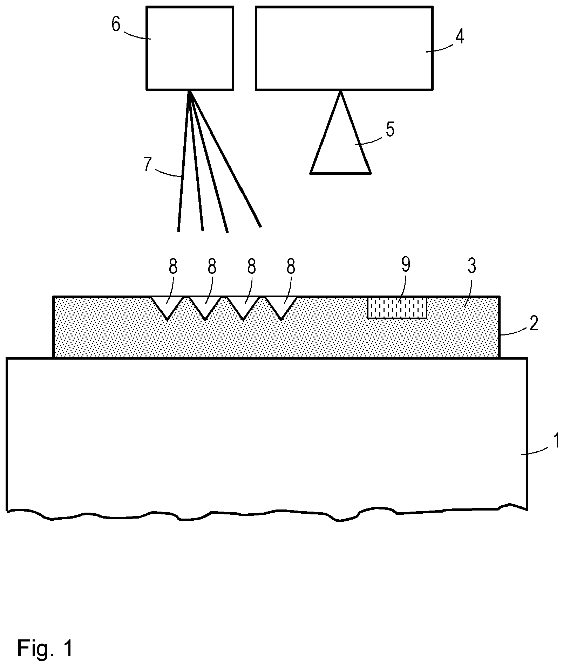

Diese und weitere Vorteile und Merkmale werden nachfolgend anhand eines Beispiels unter Zuhilfenahme der Figur 1 erläutert.
- **Fig. 1**: zeigt schematisch einen Schnitt durch einen als Druckform dienenden Druckzylinder mit einer erfindungsgemäßen Polymerschicht.

Figur 1 zeigt einen zylindrischen Grundkörper 1, der aus Metall, Nichtmetall oder Kunststoff bestehen kann. Dieser Grundkörper 1 ist der eigentliche als Druckform dienende Druckzylinder, der z.B. als Tiefdruckzylinder in eine Druckmaschine eingebaut werden kann. Am Beispiel von Figur 1 soll die Erfindung anhand des Tiefdruckverfahrens erläutert werden. Ebenso kann die Erfindung aber auch bei einem Hochdruckverfahren oder bei einer Struktur- bzw. Prägeform Anwendung finden. Der Grundkörper kann dabei auch aus Kunststoff, Glasfaserverbund, Kohlefaserverbund oder Elastomer oder einer Kombination daraus bestehen.

Auf der zylindrischen Umfangsfläche des Grundkörpers 1 ist eine Polymerschicht 2 gebildet, basierend auf einem Nanokomposit, bei dem in die Polymerschicht 2 verschiedene Füllstoffe eingelagert sind. Die Polymerschicht 2 besteht im Wesentlichen aus einem mit UV-Licht härtbaren Acrylat bzw. einer Acrylat-Mischung. Zudem sind in der Polymerschicht 2 Füllstoffe 3 eingebracht. Bei den Füllstoffen 3 handelt es sich insbesondere um sub-mikroskalige Füllstoffe, deren Partikel bzw. Pigmente in einem Größenbereich zwischen 100 nm und 999 nm liegen. Diese Füllstoffe dienen der Verbesserung der Absorption von Infrarotstrahlung und damit einer Verbesserung der Laserabtragung (Laserablation), wie oben bereits im allgemeinen Teil erläutert wurde.

Zudem ist in Fig. 1 eine UV-Lichtquelle 4 gezeigt, mit der UV-Strahlung 5 erzeugt werden kann. Die UV-Strahlung 5 dient insbesondere zum Polymerisieren des der Polymerschicht 2 zugrundeliegenden fließfähigen Ausgangsmaterials, also insbesondere des Acrylats oder der Acrylatmischung, und damit zum Erzeugen und Aushärten der Polymerschicht 2.

Weiterhin zeigt Fig. 1 einen NIR-Laser 6 (Infrarotlaser), mit dem NIR-Strahlung 7 erzeugt werden kann. Bei dem NIR-Laser 6 kann es sich um einen UKP-Laser handeln (Ultra-Kurz-Puls).

Mithilfe der auf die Polymerschicht 2 auftreffenden Infrarotstrahlung 7 können in der Oberfläche der Polymerschicht 2 Näpfchen 8 in Form von Vertiefungen erzeugt werden, die in dem späteren Tiefdruckprozess die eigentliche Druckfarbe aufnehmen sollen.

Die Näpfchen 8 können unterschiedliche Formen und Querschnitte aufweisen. So kann der Eintrittsquerschnitt eines Näpfchens z.B. quadratisch, rechteckig, rautenförmig, dreieckig oder kreisförmig sein. Auch andere Formen sind möglich. Von diesem Eintrittsquerschnitt erstreckt sich das Näpfchen 8 in die Tiefe bzw. in das Material, wobei auch hier unterschiedliche Formen möglich sind.

Beim Hochdruck wird die Druckfarbe dementsprechend in der üblichen Weise nicht in die Näpfchen 8 eingebracht, sondern auf stehengebliebenen Druckpunkten oder Flächen aufgebracht. Beim Prägen wird ein Relief in der Oberfläche gebildet, das dann in ein Trägermaterial gedrückt wird.

Die UV-Lichtquelle 4 und der NIR-Laser 6 sind in Fig. 1 nebeneinander dargestellt. Sie können jedoch sinnvollerweise auch in unterschiedlichen Vorrichtungen bzw. Bearbeitungsstationen angeordnet sein. Insbesondere kann eine Bearbeitungsstation zum Erzeugen der Polymerschicht 2 auf dem Grundkörper 1 vorgesehen sein. Nachfolgend kann der so hergestellte Druckzylinder in einer weiteren, nicht dargestellten Station mechanisch bearbeitet werden, um die Oberfläche der Polymerschicht 2 zu glätten und die Rundheit zu verbessern. Hier eignet sich zum Beispiel ein Schleifverfahren, Drehen, Polieren, Fräsen oder Drehfräsen.

Erst nachfolgend kann der Druckzylinder dann in einem Verfahrensschritt "Strukturieren" in eine Station eingebracht werden, in der der NIR-Laser 6 vorhanden ist, um die Näpfchen 8 und damit das Druckmuster (Druckform) in der Oberfläche der Polymerschicht 2 zu erzeugen.

In der Oberfläche der Polymerschicht 2 ist zudem ein Kennzeichnungsfeld 9 dargestellt. Wie oben bereits erläutert, ist es möglich, mit einer Infrarotstrahlung niedrigerer Intensität zu erreichen, dass lediglich ein Farbumschlag in der Polymerschicht 2 bewirkt wird, ohne dass eine Laserablation, also eine Strukturierung der Oberfläche, erfolgt. Dadurch kann zum Beispiel das Kennzeichnungsfeld 9 erzeugt werden, in dem Informationen wie zum Beispiel ein QR-Code oder andere Codierungen hinterlegt werden können.

Erst bei einer Bestrahlung mit einer Infrarotstrahlung 7 höherer Intensität können die eigentlichen Näpfchen 8 durch Laserablation erzeugt werden.

Zur Herstellung des Nanokomposits werden nachfolgend verschiedene Beispiele angegeben.

### Beispiel 1:

In einem 250 ml Rührgefäß werden 56 g Ebecryl 837, 14 g Sartomer SR 494, 1,75 g DYNASYLAN VTMO und eine Lösung von 64 mg Maleinsäure in 0,64 g Wasser verrührt. Danach gibt man unter fortwährendem Rühren 5-40 m% Almal-Nanopulver innerhalb von 120 Minuten und rührt weitere 3 Stunden. Nach Zugabe von 2,6 g DYNASYLAN VTMO und 5,2 g Iriotec 8210 muss die Mischung weitere drei Stunden gerührt werden.

### Beispiel 2:

In einem 250 ml Rührgefäß werden 23 g Ebecryl 1290, 46,4 g Sartomer SR 494, 12,5 g DYNASYLAN VTMO und eine Lösung von 460 mg Maleinsäure in 4,6 g Wasserverrührt. Danach gibt man unter fortwährendem Rühren 5-40 m% Almal-Nanopulver innerhalb von 120 Minuten zu und rührt weitere 4 Stunden. Nach Zugabe von 2,8 g DYNASYLAN VTMO und 5,6 g Iriotec 8210 muss die Mischung weiter drei Stunden gerührt werden.

### Beispiel 3:

In einem 250 ml Rührgefäß werden 56 g Ebecryl 837, 14 g Sartomer SR 494, 1,35 g DYNASYLAN VTMO und eine Lösung von 48 mg Maleinsäure in 0,48 g Wasser verrührt. Danach gibt man unter fortwährendem Rühren 5-20 m% ZrO₂-Nanopulver innerhalb von 120 Minuten zu. Man rührt weitere 3 Stunden und setzt der Mischung anschließend 3,0 g Sartomer SR 297 zu. Nach Zugabe von 2,6 g DYNASYLAN VTMO und 5,2 g Iriotec 8210 muss die Mischung weiter drei Stunden gerührt werden.

## Patentansprüche

1. Beschichtungsmaterial zum Beschichten einer Druckform, aufweisend
- ein flüssiges Ausgangsmaterial, das durch UV-Licht polymerisierbar ist, um eine Polymermatrix zu bilden; und
- einen Füllstoff, der eine sub-mikroskalige Größe aufweist;
- wobei das Beschichtungsmaterial zusätzlich zu dem sub-mikroskaligen Füllstoff einen weiteren Füllstoff enthält;
wobei weiterhin
- der sub-mikroskalige Füllstoff in Partikelform vorliegt und dessen Größe in einem Bereich zwischen 100 nm und 999 nm liegt;
- der weitere Füllstoff ein nanoskaliger Füllstoff ist, derart, dass der weitere Füllstoff Füllstoffpartikel mit einer nanoskaligen Größe in einem Bereich zwischen 1 nm und 99 nm aufweist,
- der sub-mikroskalige Füllstoff aus wenigstens einem Metalloxid und/oder einem Halbmetalloxid besteht, ausgewählt aus metalloxidbeschichtetem Glimmer, TiO₂ oder (Sn, Sb)O₂;
- es sich bei dem nanoskaligen Füllstoff um Metall- und/oder Halbmetalloxide handelt, ausgewählt aus Al₂O₃, SiO₂, TiO₂, ZrO₂ oder metallorganischen Partikeln; wobei
- der sub-mikroskalige Füllstoff kovalent in eine Polymermatrix des Ausgangsmaterials einbindbar ist;
- der nanoskalige Füllstoff zur Erhöhung der Verschleißfestigkeit enthalten ist, der kovalent in die Polymermatrix des Ausgangsmaterials einbindbar ist; und
- durch den sub-mikroskaligen Füllstoff in dem Ausgangsmaterial eine Absorption von IR-Strahlung bewirkbar ist, die höher ist als eine Absorption ohne Füllstoff.

2. Beschichtungsmaterial nach Anspruch 1, wobei das Ausgangsmaterial ein durch UV-Licht härtbares Acrylat enthält.

3. Beschichtungsmaterial nach einem der vorstehenden Ansprüche, wobei der sub-mikroskalige Füllstoff und der nanoskalige Füllstoff eine Transmission von UV-Strahlung gewährleisten, derart, dass das Ausgangsmaterial vollständig polymerisierbar ist.

4. Beschichtungsmaterial nach einem der vorstehenden Ansprüche, wobei das ausgehärtete Beschichtungsmaterial elektrisch ableitfähig und/oder nicht elektrostatisch aufladbar ist.

5. Druckform, mit
- einem Grundkörper; wobei
- auf einer Fläche des Grundkörpers wenigstens teilweise eine eine Polymermatrix aufweisende Polymerschicht aufgebracht ist, deren Polymerisation durch UV-Licht induziert ist;
- die Polymerschicht einen sub-mikroskaligen Füllstoff aufweist; und
- die Polymerschicht zusätzlich zu dem sub-mikroskaligen Füllstoff einen weiteren Füllstoff aufweist;
wobei weiterhin
- der sub-mikroskalige Füllstoff in Partikelform vorliegt und die Größe in einem Bereich zwischen 100 nm und 999 nm liegt;
- der weitere Füllstoff ein nanoskaliger Füllstoff ist, der Füllstoffpartikel mit einer nanoskaligen Größe in einem Bereich zwischen 1 nm und 99 nm aufweist;
- der sub-mikroskalige Füllstoff aus wenigstens einem Metalloxid und/oder einem Halbmetalloxid besteht, ausgewählt aus metalloxidbeschichtetem Glimmer, TiO₂ oder (Sn, Sb)O₂;
- es sich bei dem nanoskaligen Füllstoff um Metall- und/oder Halbmetalloxide handelt, ausgewählt aus Al₂O₃, SiO₂, TiO₂, ZrO₂ oder metallorganischen Partikeln, wobei
- der sub-mikroskalige Füllstoff kovalent in die Polymermatrix der Polymerschicht eingebunden ist;
- der nanoskalige Füllstoff zur Erhöhung der Verschleißfestigkeit enthalten ist, der kovalent in die Polymermatrix des Ausgangsmaterials eingebunden ist; und
- durch den sub-mikroskaligen Füllstoff in der Polymerschicht eine höhere Absorption von Infrarotstrahlung bewirkt wird als in der Polymerschicht ohne Füllstoff.

6. Druckform nach Anspruch 5, wobei die Polymerschicht nach ihrem Auftragen auf den Grundkörper und nach der Polymerisation mechanisch nachbearbeitet ist.

7. Druckform nach Anspruch 5 oder 6, wobei auf der Oberfläche der Polymerschicht eine Näpfchen-Struktur oder eine Relief-Struktur durch eine NIR-Strahlung erzeugbar ist.

8. Druckform nach einem der Ansprüche 5 bis 7, wobei
- die Polymerschicht vor einer Bestrahlung mit einer NIR-Strahlung opak ist; und wobei
- in der Polymerschicht durch eine Bestrahlung mit einer NIR-Strahlung ein Farbumschlag bewirkbar ist.

9. Druckform nach Anspruch 8, wobei der Farbumschlag zur Einbringung von Markierungen oder Codierungen in der Polymerschicht bereits durch eine NIR-Strahlung bewirkt wird, die eine niedrigere Intensität aufweist als die NIR-Strahlung, die zum Erzeugen der Näpfchen-Struktur erforderlich ist.

10. Druckform nach Anspruch 9, wobei die Markierung oder Codierung Daten enthält, die maschinell auslesbar sind.

11. Verfahren zum Herstellen einer Druckform mit einem Beschichtungsmaterial nach einem der Ansprüche 1 bis 4, mit den Schritten
- Aufbringen des Beschichtungsmaterials auf eine Fläche eines Grundkörpers der Druckform;
- Bilden einer Polymerschicht durch Aushärten des Beschichtungsmaterials aufgrund einer durch eine UV-Strahlung bewirkten Polymerisation;
- Bestrahlen der Polymerschicht mit einer NIR-Strahlung, zum Erzeugen einer Oberflächenstruktur in der Polymerschicht.

## Claims

1. Coating material for coating a printing plate, comprising
- a fluid source material which can be polymerised by UV light in order to form a polymer matrix; and
- a filler substance, which is of sub-microscale size;
- wherein
- in addition to the sub-microscale filling substance, the coating material contains a further filling substance;
- wherein further
- the sub-microscale filling substance is present in particle form, and its size lies in a range between 100 nm and 999 nm;
- the further filling substance is a nanoscale filling substance, in such a way that the further filling substance comprises filling substance particles of a nanoscale size in a range between 1 nm and 99 nm;
- the sub-microscale filling substance consists of at least one metal oxide and/or a semimetal oxide, selected from metal oxide-coated mica, TiO₂ or (Sn, Sb)O₂;
- the nanoscale filling substance is a metal oxide and/or semimetal oxide, selected from Al₂O₃, SiO₂, TiO₂, ZrO₂, or metal organic particles; wherein
- the sub-microscale filling substance can be covalently bonded into a polymer matrix of the source material;
- the nanoscale filling substance is contained in order to increase the wear resistance, which can be covalently bonded into the polymer matrix of the source material; and
- by means of the sub-microscale filling substance, an absorption of IR radiation can be incurred in the source material which is higher than an absorption without filling substance.

2. Coating material according to claim 1, wherein the source material contains an acrylate which can be hardened by UV light.

3. Coating material according to any one of the preceding claims, wherein the sub-microscale filling substance and the nanoscale filling substance ensure a transmission of UV radiation, in such a way that the source material can be entirely polymerised.

4. Coating material according to any one of the preceding claims, wherein the hardened coating material is electrically conductive and/or can be non-electrostatically charged.

5. Printing plate with
- - a base body, wherein
- a polymer layer comprising a polymer matrix can be applied at least partially onto a surface of the base body, the polymerisation of which can be induced by UV light;
- the polymer layer comprises a sub-microscale filling substance; and
- in addition to the sub-microscale filling substance, the polymer layer additionally comprises a further filling substance;
- wherein further
- the sub-microscale filling is present in particle form, and its size lies in a range between 100 nm and 999 nm;
- the further filling substance is a nanoscale filling substance, which comprises filling substance particles of a nanoscale size in a range between 1 nm and 99 nm;
- the sub-microscale filling substance consists of at least one metal oxide and/or a semimetal oxide, selected from metal oxide-coated mica, TiO2 or (Sn, Sb)O2;
- the nanoscale filling substance is a metal oxide and/or semimetal oxide, selected from Al2O2, SiO2, TiO₂, ZrO2, or metal organic particles; wherein
- the sub-microscale filling substance can be covalently bonded into a polymer matrix of the source material;
- the nanoscale filling substance is contained in order to increase the wear resistance, which can be covalently bonded into the polymer matrix of the source material; and
- by means of the sub-microscale filling substance, an absorption of infrared radiation can be incurred in the source material which is higher than in the polymer layer without filling substance.

6. Printing plate according to claim 5, wherein, after its application onto the base body and after polymerisation, the polymer layer can be mechanically processed.

7. Printing plate according to claim 5 or 6, wherein a cup structure or a relief structure can be produced on the surface of the polymer layer by means of NIR radiation.

8. Printing plate according to any one of claims 5 to 7, wherein
- the polymer layer is opaque before irradiation with an NIR radiation; and wherein
- a colour break can be effected in the polymer layer by irradiation with an NIR radiation.

9. Printing plate according to claim 8, wherein the colour break, for the application of markings or codings in the polymer layer, can already be effected by an NIR radiation which exhibits a lower intensity than the NIR radiation which is required for the production of the cup structure.

10. Printing plate according to claim 9, wherein the marking or coding contain data which is machine-readable.

11. Method for producing a printing plate with a coating material according to any one of claims 1 to 4, with the steps
- application of the coating material onto a surface of a base body of the printing plate;
- forming of a polymer layer by hardening of the coating material on the basis of a polymerisation effected by UV radiation;
- irradiating the polymer layer with NIR radiation for producing a surface structure in the polymer layer.

## Revendications

1. Matériau de revêtement pour le revêtement d'une plaque d'impression présentant
- un matériau de départ liquide qui est polymérisable par de la lumière UV afin de former une matrice de polymère ; et
- un matériau de remplissage qui présente une grandeur de sous-micro échelle :
- dans lequel le matériau de revêtement contient, outre le matériau de remplissage de sous-micro échelle, un autre matériau de remplissage ;
dans lequel en outre
- le matériau de remplissage de sous-micro échelle se présente sous la forme de particules et dont la grandeur se trouve dans une plage entre 100 nm et 999 nm ;
- l'autre matériau de remplissage est un matériau de remplissage de nano-échelle de telle manière que l'autre matériau de remplissage présente des particules de matériau de remplissage avec une grandeur de nano-échelle dans une plage entre 1 nm et 99 nm,
- le matériau de remplissage de sous-micro échelle est constitué d'au moins un oxyde métallique et/ou d'un oxyde semi-métallique choisi parmi le mica revêtu d'oxyde métallique, TiO₂ ou (Sn, Sb)O₂ ;
- il s'agit pour le matériau de remplissage de nano-échelle d'oxydes métalliques et/ou semi-métalliques choisis parmi Al₂O₃, SiO₂, TiO₂, ZrO₂ ou de particules métallo-organiques ; dans lequel
- le matériau de remplissage de sous-micro échelle peut être incorporé de manière covalente dans une matrice de polymère du matériau de départ ;
- le matériau de remplissage de nano-échelle est contenu pour l'augmentation de la résistance à l'usure, lequel peut être incorporé de manière covalente dans la matrice de polymère du matériau de départ ; et
- une absorption de rayonnement IR peut être provoquée par le matériau de remplissage de sous-micro échelle dans le matériau de départ, laquelle est plus élevée qu'une absorption sans matériau de remplissage.

2. Matériau de revêtement selon la revendication 1, dans lequel le matériau de départ contient un acrylate durcissable par lumière UV.

3. Matériau de revêtement selon l'une des revendications précédentes, dans lequel le matériau de remplissage de sous-micro échelle et le matériau de remplissage de nano-échelle garantissent une transmission de rayonnement UV de telle manière que le matériau de départ puisse être complètement polymérisable.

4. Matériau de revêtement selon l'une des revendications précédentes, dans lequel le matériau de revêtement durci peut être chargé de manière à pouvoir être déchargé électriquement et/ou de manière non-électrostatique.

5. Plaque d'impression comprenant
- un corps de base ; dans laquelle
- une couche de polymère présentant une matrice de polymère est au moins partiellement appliquée sur une surface du corps de base, dont la polymérisation est induite par de la lumière UV ;
- la couche de polymère présente un matériau de remplissage de sous-micro échelle ; et
- la couche de polymère présente, outre le matériau de remplissage de sous-micro échelle, un autre matériau de remplissage ;
dans lequel en outre
- le matériau de remplissage de sous-micro échelle se présente sous la forme de particules et la grandeur se trouve dans une plage entre 100 nm et 999 nm ;
- l'autre matériau de remplissage est un matériau de remplissage de nano-échelle qui présente des particules de matériau de remplissage avec une grandeur de nano-échelle dans une plage entre 1 nm et 99 nm ;
- le matériau de remplissage de sous-micro échelle est constitué d'au moins un oxyde métallique et/ou d'un oxyde semi-métallique choisi parmi le mica revêtu d'oxyde métallique, TiO₂ ou (Sn, Sb)O₂ ;
- il s'agit pour le matériau de remplissage de nano-échelle d'oxydes métalliques et/ou semi-métalliques choisis parmi Al₂O₃, SiO₂, TiO₂, ZrO₂ ou de particules métallo-organiques, dans laquelle
- le matériau de remplissage de sous-micro échelle est incorporé de manière covalente dans la matrice de polymère de la couche de polymère ;
- le matériau de remplissage de nano-échelle est contenu pour l'augmentation de la résistance à l'usure, lequel est incorporé de manière covalente dans la matrice de polymère du matériau de départ ; et
- une absorption de rayonnement infrarouge plus élevée que celle dans la couche de polymère sans matériau de remplissage est provoquée par le matériau de remplissage de sous-micro échelle dans la couche de polymère.

6. Plaque d'impression selon la revendication 5, dans laquelle la couche de polymère est transformée mécaniquement après son application sur le corps de base et après la polymérisation.

7. Plaque d'impression selon la revendication 5 ou 6, dans laquelle une structure d'alvéoles ou une structure en relief peut être générée par un rayonnement NIR sur la surface de la couche de polymère.

8. Plaque d'impression selon l'une des revendications 5 à 7, dans laquelle
- la couche de polymère est opaque avant une irradiation avec un rayonnement NIR ; et dans laquelle
- un changement de couleur peut être provoqué dans la couche de polymère par une irradiation avec un rayonnement NIR.

9. Plaque d'impression selon la revendication 8, dans laquelle le changement de couleur est déjà provoqué pour l'introduction de marquages ou codages dans la couche de polymère par un rayonnement NIR qui présente une intensité plus faible que le rayonnement NIR qui est nécessaire à la génération de la structure d'alvéoles.

10. Plaque d'impression selon la revendication 9, dans laquelle le marquage ou le codage contient des données qui peuvent être lues par machine.

11. Procédé de fabrication d'une plaque d'impression avec un matériau de revêtement selon l'une des revendications 1 à 4, avec les étapes suivantes :
- appliquer le matériau de revêtement sur une surface d'un corps de base de la plaque d'impression ;
- former une couche de polymère par durcissement du matériau de revêtement en raison d'une polymérisation provoquée par un rayonnement UV ;
- irradier de la couche de polymère avec un rayonnement NIR pour la génération d'une structure de surface dans la couche de polymère.
